# EUROPEAN PATENT SPECIFICATION

(11) **EP 3 478 125 B1**
(45) Date of publication and mention of the grant of the patent: **14.09.2022**
(21) Application number: 17820637.1
(22) Date of filing: 05.06.2017
(51) Int. Cl.: B27G 13/00

(54) **PRE-MOUNTED FURNITURE MODULE**
VORMONTIERTES MÖBELMODUL
MODULE DE MEUBLE PRÉFABRIQUÉ

(30) Priority: 30.06.2016 SE 1650953
(43) Date of publication of application: 08.05.2019
(73) Proprietor: IKEA Supply AG, 4133 Pratteln (CH)
(72) Inventor: ERIKSSON, Anders, 343 73 Virestad (SE); SJÖSTEDT, Göran, 283 96 Killeberg (SE)
(74) Representative: Ström & Gulliksson AB
(86) International application number: PCT/SE2017/050597
(87) International publication number: WO 2018/004418

(56) References cited:
- EP-A1- 1 364 599
- DE-A1- 10 027 520
- DE-A1- 19 804 787
- FR-A1- 2 844 166
- US-A- 3 797 905
- US-A1- 2004 045 246
- US-B1- 6 619 007

## Description

### TECHNICAL FIELD

The present invention relates to a pre-mounted furniture module, such as an erectable structure forming part of a drawer, a box or the like.

### BACKGROUND

It is desired to facilitate the assembly of furniture without negatively affecting handling, packaging and transport of the furniture in a flat and slim package. Today a customer buying a flat packed furniture such as a wardrobe, a cabinet, or a drawer, is required to perform the assembly of such furniture. In order to facilitate the assembly pre-manufacturing of some parts may be done which however also makes the package more bulky. Although pre-manufactured pieces of furniture, or furniture modules forming part of finished pieces of furniture, are easier to assemble into a complete product it would be desirable to provide a pre-mounted furniture module without compromising the handling, packaging or transportation of it.

DE 198 04 787 A1 discloses panels of furniture which are secured together with a hinge connection, the hinge connection is a synthetic adhesive, or a strip coated with an adhesive.

### SUMMARY

An object of the present invention is to provide an improved pre-mounted furniture module forming part of a piece of furniture, as well as a method for assembling such furniture module. This object is achieved by a solution defined in the appended independent claims; certain embodiment being set forth in the related dependent claims.

In a first aspect, there is provided a furniture module for forming part of a piece of furniture according to claim 1.

A side portion is within this context an edge of a panel, as further explained in the detailed description. In the final shape, which may be a corner shape, the side portions are abutting each other.

The adhesive may be glue, preferably a melt glue, such as a reactive type of melt glue or a thermoplastic melt glue.

A part of the side portion of the second panel may form a stop surface being configured to engage with the first panel thus preventing said hinge connection from further rotation of the second panel relative the first panel.

The second panel may be rotated 270° relative the first panel in order to form a corner shape.

The furniture module may comprise one first panel and two second panels, wherein said two second panels are pre-mounted to a first and a second side portion of said first panel, said first and second side portions being arranged at opposite sides of said first panel.

The first panel may be a bottom piece, and said second panel is a side wall. Optionally, the first panel is a back piece, and the second panel is a side wall.

According to a second aspect, a drawer is provided. The drawer comprises a furniture module according to the first aspect described above.

According to a third aspect a method for assembling a furniture module is provided according to claim 9.

### BRIEF DESCRIPTION OF THE DRAWINGS

Embodiments of the invention will be described in the following, reference being made to the appended drawings which illustrate non-limiting examples of how the inventive concept can be reduced into practice.
Fig. 1 is a perspective view of a chest of drawers with a number of drawers according to an embodiment of the invention;
Fig. 2 is a perspective view of a pre-mounted furniture module forming part of a drawer according to an embodiment, in a folded state,
Fig. 3 is a detailed view of a corner of the part of the drawer shown in Fig. 2;
Fig. 4 is a perspective view of a pre-mounted furniture module forming part of a drawer not according to the invention, in a folded state,
Figs. 5a-e are detailed views of an assembly method of the furniture module shown in Fig. 2;
Fig. 6 is a perspective view of the pre-mounted furniture module forming part of the drawer shown in Fig. 2, here illustrated in an unfolded state;
Fig. 7 is a detailed view of a corner of the furniture module shown in Fig. 6;
Fig. 8 is a perspective view of the pre-mounted furniture module shown in Fig. 4, here illustrated in an unfolded state;
Fig. 9 is a perspective view of a furniture module being manufactured by a milling tool.
Figs. 10a-c are schematically showing three manufacturing methods.
Fig.11 and Figs 12a-d are showing the milling of the first panel and the second panel in cross-sectional views.

### DETAILED DESCRIPTION OF EMBODIMENTS

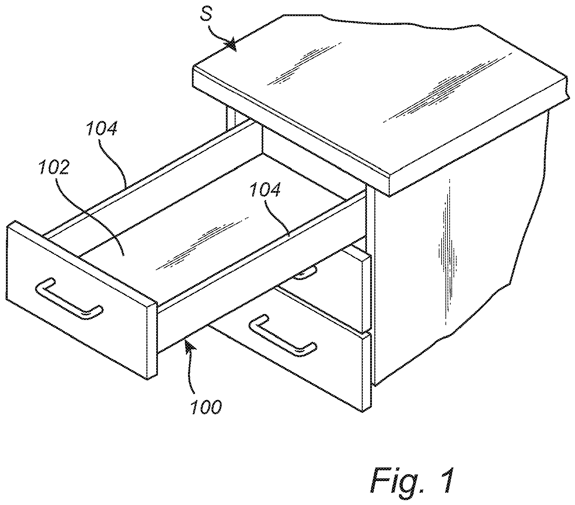

With reference to the drawings there is provided a piece of furniture 100, such as a drawer, a box, a cabinet or the like. The piece of furniture is manufactured at least partly by assembly of a pre-mounted furniture module 100 which will be described in the following. In one embodiment the furniture module 100 forms part of a drawer being slidably supported by means of a chest of drawers S (see Fig. 1). However it should be realized that the furniture module 100 is by no means assumed to be limited to only this application but is instead applicable also for other pieces of furniture such as shelf systems, tables, side boards, etc.

As can be seen in Fig. 1 the furniture module 100 comprises a first panel 102, forming the bottom piece of the drawer, and two panels 104 connected to opposite sides of the bottom piece 102. A front and back piece may also be connected to the furniture module 100 in order to form a complete drawer, as well as guiding rails for enabling a sliding movement of the drawer relative the chest of drawers S.

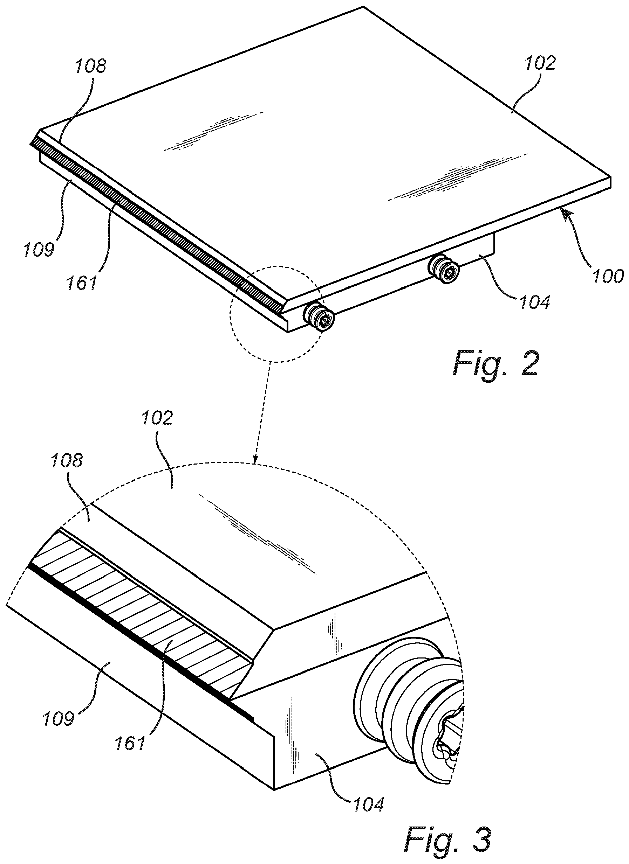

Fig. 2 shows parts of a furniture module 100 with a first panel 102 and a second panel 104 pre-mounted to each other. In Fig. 2 the first and second panels 102, 104 are positioned in a folded state, i.e. a pre-assembly state. The first and second panels 102, 104 are pre-mounted to each other by means of an adhesive 161, preferably in the form of glue, which is arranged along the length of a side portion 108 of the first panel 102 and a side portion 109 of the second panel 104. This is further shown in Fig. 3. The method for applying the adhesive 161 and for producing the pre-mounted furniture module 100 will be described later. The first panel 102 may for example be a bottom piece of a drawer and the second panel 104 may for example be a side wall of the drawer.

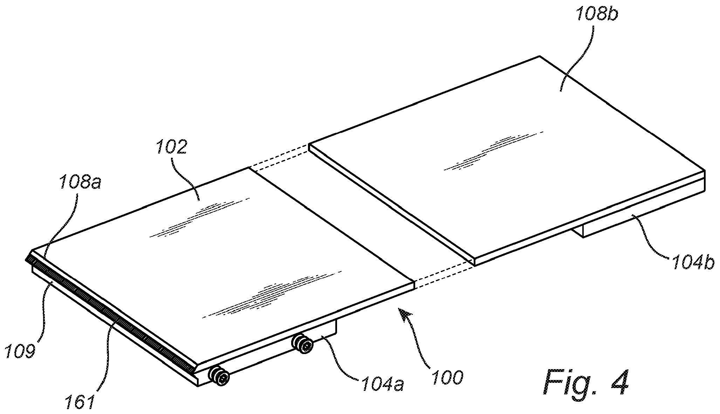

In the exemplary embodiment shown in Fig. 4, also showing the folded state, the furniture module 100 has one first panel 102, e.g. forming the bottom piece of a drawer, and two second panels 104a, 104b forming the sidewalls of the drawer. The second panels 104a, 104b are pre-mounted at a respective first and a second side portion 108a, 108b of the first panel 102 respectively. As is shown in Fig. 4 only one second panel 104a is provided with dowels on its lateral edge; however also the other second panel 104b could be equipped with such dowels or other suitable means for allowing connection of additional panels to the second panels 104a, 104b. For example, the dowels may be used to connect a front panel and/or a rear panel to the furniture module 100 such that a drawer, having one bottom piece 102 and four lateral walls, is formed.

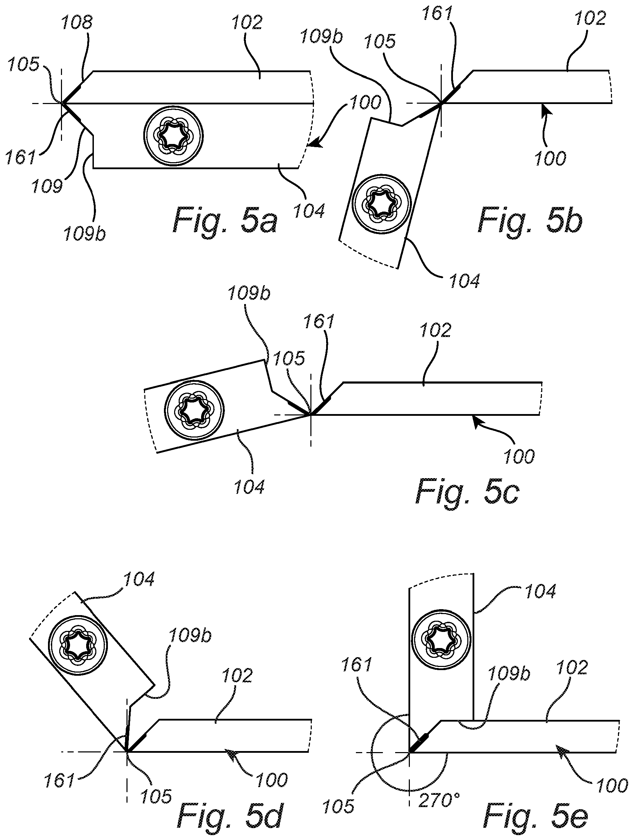

When assembling the furniture module 100 to a corner shape being ready to form part of a piece of furniture, the second panel(s) 104 is rotated relative the first panel 102 from a folded state to an unfolded state, as is shown in Figs. 5a-e. This is enabled due to the adhesive 161 forming a hinge connection 105 between the first and second panel 102, 104.

Initially a user unfolds the first panel 102 relative the second panel 104. The relative rotation between the first panel 102 and the second panel 104 is approximately 270°. As is shown in Fig. 5e the side portion 108 of the first panel 102 and the side portion 109 of the second panel 104 will face each other and meet, abutting each other, when the final corner shape is formed. Additionally, the side portion 109 of the second panel 104 is provided with a stop surface 109b being arranged at 90° relative the general plane in which the second panel 104 extends. This stop surface 109b will prevent the second panel 104 to rotate beyond the desired end position, in this embodiment being 270°. This means that the adhesive 161 is located only on the inside of furniture module 100, i.e. being totally enclosed by the first and second panel 102, 104.

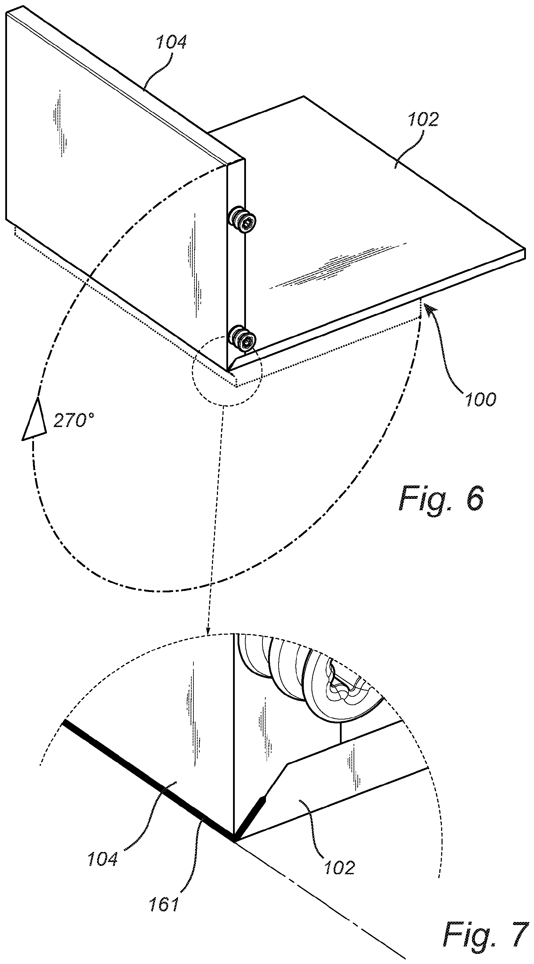

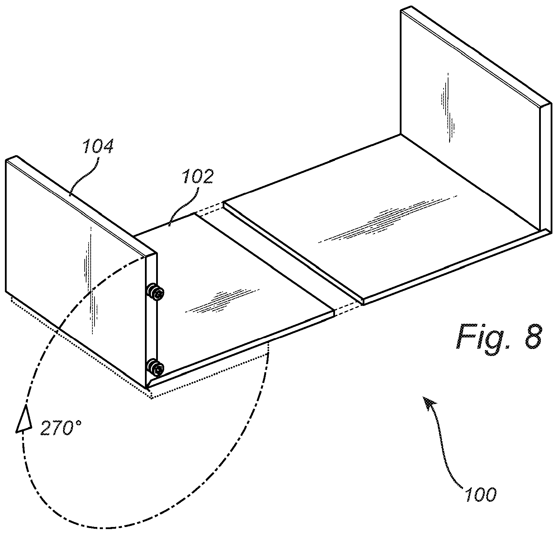

Figs. 6-7 shows the furniture module explained previously with reference to Fig. 2, while Fig. 8 shows the furniture module explained previously with reference to Fig. 4. In these figures the furniture modules are shown in their unfolded states, i.e. after the panels 102, 104 have been unfolded 270° with respect to each other. The adhesive 161 is substantially enclosed by the two panels 102, 104. After the furniture module 100 has been unfolded it may be connected to further panels (not shown), for example a front panel and/or a rear panel.

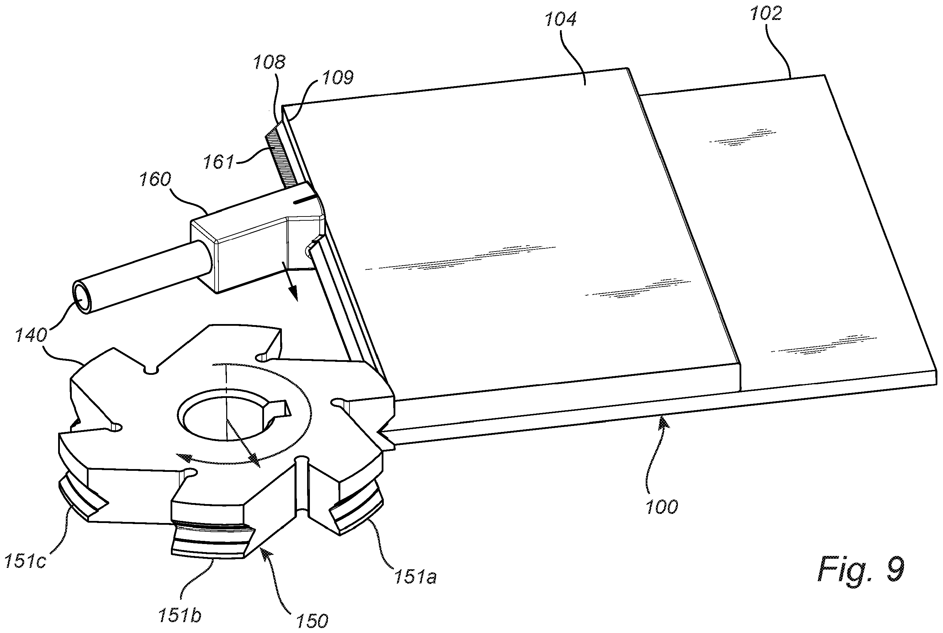

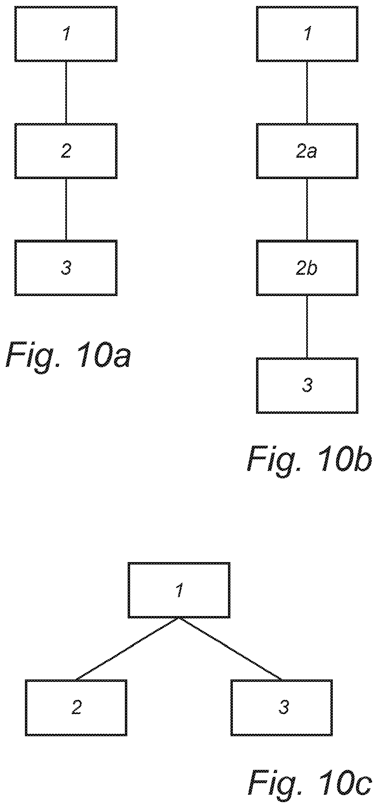

Fig. 9 illustrates an ongoing method for manufacturing the pre-mounted furniture module 100 while Figs. 10a-c schematically illustrate different types of manufacturing methods.

The first panel 102 and a second panel 104 are firstly arranged adjacent to each other such that a side portion 108 of the first panel 102 is substantially flush with a side portion 109 of the second panel 104. The side portion 108 of the first panel 102 and the side portion 109 of the second panel 104 are then milled by means of at least one milling tool 150, preferably a multipoint rotary tool with several milling cutters 151a-c. In the shown embodiment there is only one milling tool 150 having a plurality of milling cutters 151a-c cutting the first panel 102 and the second panel 104 simultaneously. The milling tool 150 is arranged to rotate at a specific speed and at the same time move along the extension of the side portions 108, 109 of the first panel 102 and the second panel 104. The milling tool 150 preferably runs along the entire length of the side portions 108, 109 and the milling cutters 151a-c are provided with respective patterns to cut the side portions 108, 109 in a predetermined way while the milling tool 150 rotates. The milling tool 150 is followed by a joining tool 160 configured to apply the adhesive 161 to the side portions 108, 108 in order to form the hinge connection 105 between the first and second panel 102, 104.

In an alternative embodiment (not shown) milling of the first panel 102 is made by a first milling tool and milling of the second panel is made by a second milling tool, whereby the milling cutters of the respective milling tools have different cutting patterns.

In yet another alternative embodiment (not shown) milling includes milling the side portion 108 of the first panel 102 with at least a first milling cutter of the milling tool and milling the side portion 109 of the second panel 104 with at least a second milling cutter of the milling tool. The first milling cutter may in such embodiment have a different pattern than the second milling cutter such that they work the first panel 102 and the second panel 104 differently. For a rotary milling tool having a plurality of milling cutters preferably every second milling cutter is configured to work on the first panel 102 and the remaining milling cutters are configured to work on the second panel 104.

The milling tool may be designed in whichever way is suitable or desired. Yet another example is a milling tool which has at least three milling cutters, where a first milling cutter is configured to work the first furniture panel 102 and the second furniture panel 104 in a way different from the second and a third milling cutter, and the second milling cutter is configured to work the first and second furniture panel 102, 104 in a way different from the third milling cutter. The patterns of the milling cutters and their respective positions can be varied.

Figs. 10a-c further shows different types of manufacturing processes for producing a pre-mounted furniture module 100. Fig. 10a describes a process of:
1. arranging the first furniture panel 102 and the second furniture panel 104 adjacent to each other such that the side portion 108 of the first furniture panel 102 is substantially flush with the side portion 109 of the second furniture panel 104;
2. milling the side portion 108 of the first furniture panel 102 and the side portion 109 of the second furniture panel 104 by means of a milling tool 150, and
3. joining the side portion 108 of the first furniture panel 102 to the side portion 109 of the second furniture panel 104 by means of an adhesive 161, where the adhesive creates a hinge connection 105 between the first and second furniture panel 102, 104.

Fig. 10b describes a process of:
1. arranging the first furniture panel 102 and the second furniture panel 104 adjacent to each other such that the side portion 108 of the first furniture panel 102 is substantially flush with the side portion 109 of the second furniture panel 104;
2a. milling the side portion 108 of the first furniture panel 102 by means of a first milling tool,
2b. milling the side portion 109 of the second furniture panel 104 by means of a second milling tool, and
3. joining the side portion 108 of the first furniture panel 102 to the side portion 109 of the second furniture panel 104 by means of an adhesive 161, where the adhesive creates a hinge connection 105 between the first and second furniture panel 102, 104.

Further, Fig. 10c describes a process of:
1. arranging the first furniture panel 102 and the second furniture panel 104 adjacent to each other such that the side portion 108 of the first furniture panel 102 is substantially flush with the side portion 109 of the second furniture panel 104;
2. milling the side portion 108 of the first furniture panel 102 and the side portion 109 of the second furniture panel 104 by means of a milling tool 150, and simultaneously
3. joining the side portion 108 of the first furniture panel 102 to the side portion 109 of the second furniture panel 104 by means of an adhesive 161, where the adhesive creates a hinge connection 105 between the first and second furniture panels 102, 104.

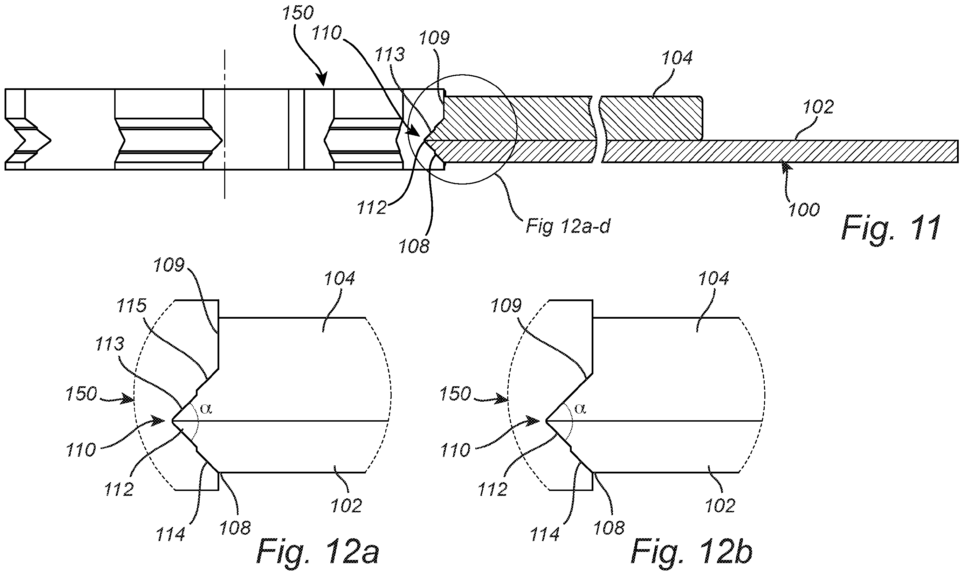

With reference to Fig. 11 and Figs. 12a-d possible results of the milling process are shown. For example, during the milling process a part of the side portion 108 of the first panel 102 around a joining area 110 is cut away creating a surface, called a joining surface 112. At the same time a part of the side portion 109 of the second panel 104, around the joining area 110 are cut away, creating a corresponding surface, also called a joining surface 113. The two joining surfaces 112, 113 are dimensioned such that they can receive an adhesive 161 during the step of joining the first panel 102 and the second panel 104. The joining surface 112 of the first panel 102 and the joining surface 113 of the second panel 104 are arranged at an angle α of between 10° and 170°, preferably at an angle of between 80° and 100° and even more preferably about 90°.

The milling process further includes cutting away another part of the side portions 108, 109 of the first and second panels 102, 104, next to the joining surfaces 112, 113, creating other intermediate surfaces 114, 115. Each intermediate surface 114, 115 is parallel and slightly raised with respect to the adjacent joining surface 112, 113 respectively. Since the intermediate surfaces 114, 115 are slightly raised they form a natural stop for the adhesive 161 as well as a guide which the joining tool 160 can follow when applying the adhesive 161. This is shown in Fig. 12a.

The side portions 108, 109 shown in Fig. 12a may also be provided by a series of milling operations. For example, the side portion 108 of the first panel 102 may be milled in a first operation such that the joining surface 112 and the intermediate surface 114 are formed. In this operation, the side portion 109 of the second panel 104 is preferably left unaffected. This is shown in Fig. 12b.

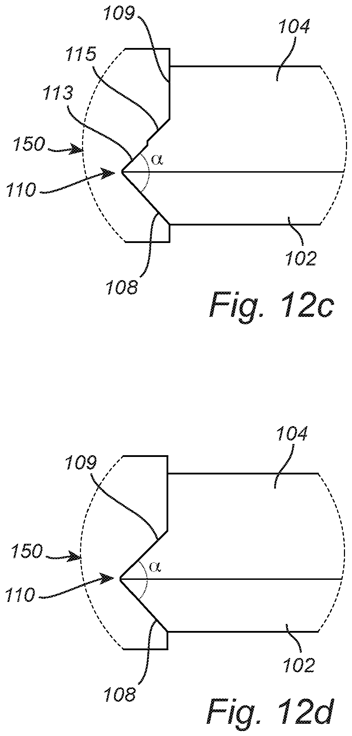

For such embodiment the side portion 109 of the second panel 104 may be milled in a second operation such that the joining surface 113 and the intermediate surface 115 are formed. In this operation, the side portion 108 of the first panel 102 is preferably left unaffected. This is shown in Fig. 12c.

Optionally the operations shown in Figs. 12b and 12c may be preceded by a milling operation in which both the first and second side portions 108, 109 are milled, however only to an extent shown in Fig. 12d. This milling operation does not provide a distinction between the joining surface 112, 113 and the intermediate surface 114, 115.

After the first panel 102 and second panel 104 have been milled they are connected by means of the adhesive 161, preferably in the form of glue. The manufacturing method includes joining the first panel 102 and the second panel 104 by means of the joining tool 160. The joining tool 160 is configured to apply the adhesive 161 at least around the joining area 110 of the side portion 108 of the first panel 102 and the side portion 109 of the second panel 104. Further, the joining tool 160 applies the adhesive 161 substantially along the entire length of the side portions 108, 109 of the first panel 102 and second panel 104.

Although the present invention has been described above with reference to specific embodiments, it is not intended to be limited to the specific form set forth herein. Rather, the invention is limited only by the accompanying claims.

## Claims

1. A furniture module for forming part of a piece of furniture, comprising a first panel (102) and at least one second panel (104) being pre-mounted to said first panel (102) by means of an adhesive (161) forming a hinge connection (105) between said first panel (102) and said second panel (104), wherein a side portion (108) of the first panel (102) is facing a side portion (109) of the second panel (104) when the furniture module is assembled into a final shape, and wherein the adhesive (161) is arranged onto the side portion (108) of the first panel (102) along at least a part of its length and onto the side portion (109) of the second panel (104) along at least a part of its length
wherein said adhesive (161) is arranged along essentially the entire length of the side portion (108) of said first panel (102) and along essentially the entire length of the side portion (109) of said second panel (104) or said adhesive (161) is arranged along only a part of the entire length of the side portion (108) of said first panel (102) and/or said adhesive (161) is arranged only along a part of the entire length of the side portion (109) of said second panel (104);
wherein the side portion (108) of said first panel (102) comprises a first surface (112) configured to receive said adhesive (161) and the side portion (109) of said second panel (104) comprises a first surface (113) configured to receive said adhesive (161), wherein said first surfaces (112, 113) are adapted to be arranged at an angle (α) of between 10° and 170°, more preferably between 30° and 140°, relative each other during joining of the first panel (102) to the second panel (104) by means of the adhesive (161);
**characterized in that**
the side portion (108) of the first panel (102) comprises a second surface (114) being raised with respect to the first surface (112) of the first panel (102) and parallel to the first surface (112) of the first panel (102), and/or the side portion (109) of the second panel (104) comprises a second surface (115) being raised with respect to the first surface (113) of the second panel (104) and parallel to the first surface (113) of the second panel (102).

2. The furniture module according to claim 1, wherein said angle (α) is between 80° and 100°, preferably 90°.

3. The furniture module according to any one of the preceding claims, wherein said adhesive (161) is glue.

4. The furniture module according to any one of the preceding claims, wherein a part of the side portion (109) of the second panel (104) forms a stop surface (109b) being configured to engage with the first panel (102) thus preventing said hinge connection (105) from further rotation of the second panel (104) relative the first panel (102).

5. The furniture module according to any one of the preceding claims, wherein the second panel (104) is rotated 270° relative the first panel (102) in order to form a corner shape.

6. The furniture module according to any one of the preceding claims, comprising one first panel (102) and two second panels (104a, 104b), wherein said two second panels (104a, 104b) are pre-mounted to a first and a second side portion (108a, 108b) of said first panel (102), said first and second side portions (108a, 108b) being arranged at opposite sides of said first panel (102).

7. The furniture module according to any one of the preceding claims, wherein said first panel (102) is a bottom piece, and said second panel (104) is a side wall, or wherein said first panel (102) is a back piece, and said second panel (104) is a side wall.

8. A drawer, comprising a furniture module (100) according to any one of the preceding claims.

9. A method for assembling a furniture module (100) having a first panel (102) being pre-mounted to a second panel (104) by means of an adhesive (161) forming a hinge connection (105) between said first panel (102) and said second panel (104), the method comprising unfolding the first panel (102) and the second panel (104) about said hinge connection (105) approximately 270° to form a corner shape, wherein the adhesive (161) is arranged onto a side portion (108) of the first panel (102) along at least a part of its length and onto a side portion (109) of the second panel (104) along at least a part of its length, and wherein the side portions (108, 109) of the first and second panels (102, 104) are facing each other when the furniture module (100) is arranged in the corner shape, wherein:
the side portion (108) of said first panel (102) comprises a first surface (112) configured to receive said adhesive (161) and the side portion (109) of said second panel (104) comprises a first surface (113) configured to receive said adhesive (161); and
the side portion (108) of the first panel (102) comprises a second surface (114) being raised with respect to the first surface (112) of the first panel (102) and parallel to the first surface (112) of the first panel (102), and/or the side portion (108) of the second panel (104) comprises a second surface (115) being raised with respect to the first surface (113) of the second panel (104) and parallel to the first surface (113) of the second panel (102).

## Patentansprüche

1. Ein Möbelmodul zur Bildung eines Teils eines Möbelstücks, das eine erste Platte (102) und mindestens eine zweite Platte (104) umfasst, die an der ersten Platte mittels eines Klebstoffs (161), der eine Scharnierverbindung (105) zwischen der ersten Platte (102) und der zweiten Platte (104) bildet, montiert ist, wobei ein Seitenabschnitt (108) der ersten Platte (102) einem Seitenabschnitt (109) der zweiten Platte (104) zugewandt ist, wenn das Möbelmodul in eine endgültige Form zusammengebaut wird, und wobei der Klebstoff (161) auf dem Seitenabschnitt (108) der ersten Platte (102) entlang mindestens eines Teils von deren Länge angeordnet ist, und auf dem Seitenabschnitt (109) der zweiten Platte (104) entlang mindestens eines Teils von deren Länge angeordnet ist, wobei der Klebstoff (161) entlang im Wesentlichen der gesamten Länge des Seitenabschnitts (108) der ersten Platte (102) und entlang im Wesentlichen der gesamten Länge des Seitenabschnitts (109) der zweiten Platte (104) angeordnet ist oder der Klebstoff (161) entlang nur eines Teils der gesamten Länge des Seitenabschnitts (108) der ersten Platte (102) angeordnet ist und/oder der Klebstoff (161) entlang nur eines Teils der gesamten Länge des Seitenabschnitts (109) der zweiten Platte (104) angeordnet ist; wobei der Seitenabschnitt (108) der ersten Platte (102) eine erste Oberfläche (112) aufweist, die so konfiguriert ist, dass sie den Klebstoff (161) aufnimmt, und der Seitenabschnitt (109) der zweiten Platte (104) eine erste Oberfläche (113) aufweist, die so konfiguriert ist, dass sie den Klebstoff (161) aufnimmt, wobei die ersten Oberflächen (112, 113) so angepasst sind, dass sie während des Verbindens der ersten Platte (102) mit der zweiten Platte (104) mittels des Klebstoffs (161) in einem Winkel (α) zwischen 10⁰ und 170⁰, vorzugsweise zwischen 30⁰ und 140⁰, zueinander angeordnet sind; **dadurch gekennzeichnet, dass** der Seitenabschnitt (108) der ersten Platte (102) eine zweite Oberfläche (114) aufweist, die gegenüber der ersten Oberfläche (112) der ersten Platte (102) erhöht ist und parallel zur ersten Oberfläche (112) der ersten Platte (102) verläuft, und/oder dass der Seitenabschnitt (109) der zweiten Platte (104) eine zweite Oberfläche (115) aufweist, die gegenüber der ersten Oberfläche (113) der zweiten Platte (104) erhöht ist und parallel zu der ersten Oberfläche (113) der zweiten Platte (102) verläuft.

2. Möbelmodul nach Anspruch 1, wobei der Winkel (a) zwischen 80⁰ und 100⁰ vorzugsweise 90⁰ beträgt.

3. Möbelmodul nach einem der vorhergehenden Ansprüche, **dadurch gekennzeichnet, dass** der Klebstoff (161) ein Leim ist.

4. Möbelmodul nach einem der vorhergehenden Ansprüche, wobei ein Teil des Seitenabschnitts (109) der zweiten Platte (104) eine Anschlagfläche (109b) bildet, die so konfiguriert ist, dass sie mit der ersten Platte (102) in Eingriff kommt, wodurch die Scharnierverbindung (105) an einer weiteren Drehung der zweiten Platte (104) gegenüber der ersten Platte (102) gehindert ist.

5. Möbelmodul nach einem der vorhergehenden Ansprüche, wobei die zweite Platte (104) um 270° gegenüber der ersten Platte (102) gedreht ist, um eine Eckform zu bilden.

6. Möbelmodul nach einem der vorhergehenden Ansprüche, umfassend eine erste Platte (102) und zwei zweite Platten (104a, 104b), wobei die beiden zweiten Platten (104a, 104b) an einem ersten und einem zweiten Seitenabschnitt (108a, 108b) der ersten Platte (102) vormontiert sind, wobei die ersten und zweiten Seitenabschnitte (108a, 108b) an gegenüberliegenden Seiten der ersten Platte (102) angeordnet sind.

7. Das Möbelmodul nach einem der vorhergehenden Ansprüche, wobei die erste Platte (102) ein Bodenteil und die zweite Platte (104) eine Seitenwand ist, oder
wobei die erste Platte (102) ein Rückenteil und die zweite Platte (104) eine Seitenwand ist.

8. Schublade, umfassend ein Möbelmodul (100) nach einem der vorhergehenden Ansprüche.

9. Verfahren zum Zusammenbauen eines Möbelmoduls (100) mit einer ersten Platte (102), die an einer zweiten Platte (104) mit Hilfe eines Klebstoffs (161) vormontiert ist, der eine Scharnierverbindung (105) zwischen der ersten Platte (102) und der zweiten Platte (104) bildet, wobei das Verfahren das Entfalten der ersten Platte (102) und der zweiten Platte (104) um die Scharnierverbindung (105) herum um etwa 270⁰ umfasst, um eine Eckform zu bilden, wobei der Klebstoff (161) auf einem Seitenabschnitt (108) der ersten Platte (102) entlang zumindest eines Teils von deren Länge angeordnet ist, und auf einem Seitenabschnitt (109) der zweiten Platte (104) entlang zumindest eines Teils von deren Länge,
wobei die Seitenabschnitte (108, 109) der ersten und zweiten Platte (102, 104) einander zugewandt sind, wenn das Möbelmodul (100) in der Eckform angeordnet ist, wobei:
der Seitenabschnitt (108) der ersten Platte (102) eine erste Oberfläche (112) aufweist, die konfiguriert ist, um den Klebstoff (161) aufzunehmen, und der Seitenabschnitt (109) der zweiten Platte (104) eine erste Oberfläche (113) aufweist, die konfiguriert ist, um den Klebstoff (161) aufzunehmen; und der Seitenabschnitt (108) der ersten Platte (102) eine zweite Oberfläche (114) aufweist, die in Bezug auf die erste Oberfläche (112) der ersten Platte (102) erhöht und parallel zu der ersten Oberfläche (112) der ersten Platte (102) ist, und/oder der Seitenabschnitt (108) der zweiten Platte (104) eine zweite Oberfläche (115) aufweist, die in Bezug auf die erste Oberfläche (113) der zweiten Platte (104) erhöht und parallel zu der ersten Oberfläche (113) der zweiten Platte (102) ist.

## Revendications

1. Module de meuble destiné à former une partie d'un meuble, comprenant un premier panneau (102) et au moins un second panneau (104) qui est prémonté sur ledit premier panneau (102) au moyen d'un adhésif (161) formant une liaison articulée (105) entre ledit premier panneau (102) et ledit second panneau (104), dans lequel une partie latérale (108) du premier panneau (102) fait face à une partie latérale (109) du second panneau (104) lorsque le module de meuble est assemblé en une forme finale, et dans lequel l'adhésif (161) est disposé sur la partie latérale (108) du premier panneau (102) sur au moins une partie de sa longueur et sur la partie latérale (109) du second panneau (104) sur au moins une partie de sa longueur
dans lequel ledit adhésif (161) est disposé sensiblement sur toute la longueur de la partie latérale (108) dudit premier panneau (102) et sensiblement sur toute la longueur de la partie latérale (109) dudit second panneau (104), ou ledit adhésif (161) n'est disposé que sur une partie de toute la longueur de la partie latérale (108) dudit premier panneau (102) et/ou ledit adhésif (161) n'est disposé que sur une partie de toute la longueur de la partie latérale (109) dudit second panneau (104) ;
dans lequel la partie latérale (108) dudit premier panneau (102) comprend une première surface (112) conçue pour recevoir ledit adhésif (161) et la partie latérale (109) dudit second panneau (104) comprend une première surface (113) conçue pour recevoir ledit adhésif (161), dans lequel lesdites premières surfaces (112, 113) sont adaptées pour être disposées à un angle (α) compris entre 10° et 170°, de préférence entre 30° et 140°, l'une par rapport à l'autre pendant la liaison du premier panneau (102) au second panneau (104) au moyen de l'adhésif (161) ;
**caractérisé en ce que**
la partie latérale (108) du premier panneau (102) comprend une seconde surface (114) surélevée par rapport à la première surface (112) du premier panneau (102) et parallèle à la première surface (112) du premier panneau (102), et/ou la partie latérale (109) du second panneau (104) comprend une seconde surface (115) surélevée par rapport à la première surface (113) du second panneau (104) et parallèle à la première surface (113) du second panneau (102) .

2. Module de meuble selon la revendication 1, dans lequel ledit angle (α) est compris entre 80° et 100°, et de préférence égal à 90°.

3. Module de meuble selon l'une quelconque des revendications précédentes, dans lequel ledit adhésif (161) est une colle.

4. Module de meuble selon l'une quelconque des revendications précédentes, dans lequel une partie de la partie latérale (109) du second panneau (104) forme une surface de butée (109b) qui est conçue pour coopérer avec le premier panneau (102) empêchant ainsi que ladite liaison articulée (105) ne tourne davantage le second panneau (104) par rapport au premier panneau (102).

5. Module de meuble selon l'une quelconque des revendications précédentes, dans lequel le second panneau (104) est tourné de 270° par rapport au premier panneau (102) afin de former une forme de coin.

6. Module de meuble selon l'une quelconque des revendications précédentes, comprenant un premier panneau (102) et deux seconds panneaux (104a, 104b), dans lequel lesdits deux seconds panneaux (104a, 104b) sont prémontés sur une première et une seconde partie latérale (108a, 108b) dudit premier panneau (102), lesdites première et seconde parties latérales (108a, 108b) étant disposées au niveau de côtés opposés dudit premier panneau (102).

7. Module de meuble selon l'une quelconque des revendications précédentes, dans lequel ledit premier panneau (102) est un élément de fond, et ledit second panneau (104) est une paroi latérale, ou dans lequel ledit premier panneau (102) est un élément arrière, et ledit second panneau (104) est une paroi latérale.

8. Tiroir, comprenant un module de meuble (100) selon l'une quelconque des revendications précédentes.

9. Procédé d'assemblage d'un module de meuble (100) comportant un premier panneau (102) qui est prémonté sur un second panneau (104) au moyen d'un adhésif (161) formant une liaison articulée (105) entre ledit premier panneau (102) et ledit second panneau (104), le procédé comprenant l'étape consistant à déplier le premier panneau (102) et le second panneau (104) autour de ladite liaison articulée (105) à approximativement 270° pour former une forme de coin, dans lequel l'adhésif (161) est disposé sur une partie latérale (108) du premier panneau (102) sur au moins une partie de sa longueur et sur une partie latérale (109) du second panneau (104) sur au moins une partie de sa longueur, et dans lequel les parties latérales (108, 109) des premier et second panneaux (102, 104) se font face lorsque le module de meuble (100) est disposé selon la forme de coin, dans lequel :
la partie latérale (108) dudit premier panneau (102) comprend une première surface (112) conçue pour recevoir ledit adhésif (161) et la partie latérale (109) dudit second panneau (104) comprend une première surface (113) conçue pour recevoir ledit adhésif (161) ; et
la partie latérale (108) du premier panneau (102) comprend une seconde surface (114) surélevée par rapport à la première surface (112) du premier panneau (102) et parallèle à la première surface (112) du premier panneau (102), et/ou la partie latérale (108) du second panneau (104) comprend une seconde surface (115) surélevée par rapport à la première surface (113) du second panneau (104) et parallèle à la première surface (113) du second panneau (102) .
